# EUROPÄISCHE PATENTSCHRIFT

(11) **EP 2 190 646 B1**
(45) Veröffentlichungstag und Bekanntmachung des Hinweises auf die Patenterteilung: **22.06.2011**
(21) Anmeldenummer: 08801928.6
(22) Anmeldetag: 09.09.2008
(51) Int. Cl.: B29C 65/20, B29C 65/78, B29C 57/04, E06B 3/96

(54) **VERFAHREN UND VORRICHTUNG ZUM VERSCHWEISSEN VON KUNSTSTOFFPROFILSTÄBEN**
METHOD AND DEVICE FOR FUSING PLASTIC PROFILE BARS
PROCÉDÉ ET DISPOSITIF DE SOUDAGE DE BARRES PROFILÉES EN PLASTIQUE

(30) Priorität: 11.09.2007 DE 102007043195
(43) Veröffentlichungstag der Anmeldung: 02.06.2010
(73) Patentinhaber: Rotox Besitz- und Verwaltungsgesellschaft mbH, 65611 Brechen (DE)
(72) Erfinder: EISENBACH, Bernhard, 65611 Brechen (DE); SCHMITTINGER, Guido, 56850 Hahn (DE); SCHWÖRENDT, Thorsten, 87448 Waltenhofen (DE)
(74) Vertreter: Müller, Eckhard
(86) Internationale Anmeldenummer: PCT/EP2008/007355
(87) Internationale Veröffentlichungsnummer: WO 2009/033634

(56) Entgegenhaltungen:
- DE-A1- 10 148 265
- JP-A- 2006 062 436

## Beschreibung

### Technisches Gebiet

Die Erfindung betrifft ein Verfahren und eine Vorrichtung zum Verschweißen von Kunststoffprofilstäben. Die Erfindung findet insbesondere Einsatz bei der Herstellung von Fenster- oder Türrahmen, wobei zwei Kunststoffprofilstäbe vorgesehen sind, von denen einer wenigstens eine Dichtung aufweist und von denen wenigstens einer mit seinen zu verschweißenden Flächen mittels einer Heizvorrichtung erhitzt und die Profilstäbe sodann zur Herstellung einer Verbindung gegeneinander gepresst werden. Vorrichtungsgemäß sind hierzu wenigstens eine Spanneinrichtung zum Einspannen der Profilstäbe und wenigstens eine Heizvorrichtung zum Erhitzen wenigstens einer der zu verschweißenden Flächen der Profilstäbe vorgesehen.

### Stand der Technik

Aus der DE 36 41 019 C2 ist eine Vorrichtung zum Verschweißen von Kunststoffprofilen zu Rahmen für Fenster oder Türen mit zwei ihrem Abstand zueinander verstellbaren Schweißeinheiten bekannt. Jede Schweißeinheit weist Spanneinrichtungen zum Einspannen der an ihren Verbindungsflächen miteinander zu verschweißenden Profilstäbe auf, mit einem zwischen die Spanneinrichtungen verfahrbaren Anschlag zum Positionieren der Profilstäbe und einem Schweißspiegel, der ebenfalls zwischen die miteinander zu verbindenden Enden der Kunststoffprofile bringbar ist, um die Verbindungsflächen vor dem Zusammenpressen zu erhitzen.

Seit einigen Jahren werden die Kunststoffprofilstäbe, aus denen die Fenster- oder Türrahmen hergestellt werden, von den Profilherstellern mit bereits eingezogenen oder anextrudierten Dichtungen für das Glas und/oder für die Abdichtung der Flügel-Rahmenverbindung ausgeliefert. Beim Verschweißen beziehungsweise Fügen der Profilstäbe miteinander werden die aus thermoplastischem Kunststoff bestehenden Rahmenstücke zunächst mit beispielsweise einem Heizspiegel auf eine Temperatur oberhalb ihrer Schmelztemperatur erhitzt und dann gegeneinander gepresst, bis die Profilstäbe abgekühlt sind und eine dauerhafte Verbindung herstellen. Durch das Gegeneinanderpressen wird plastisch verformbarer Kunststoff im Schweißbereich aufgeworfen und bildet eine Schweißraupe bzw. eine Schweißnaht. Diese Schweißnaht wird anschließend spanhebend abgetragen (verputzt).

Im Bereich der eingezogenen oder anextrudierten Dichtungen treten hierbei jedoch Probleme auf, da zum einen die Dichtungen durch die Materialansammlungen angehoben werden können, was zunächst die Dichtfunktion beeinflussen kann, da keine gleichmäßige Anlage über die gesamte Rahmenlänge erreicht wird, sondern nur eine punktuelle Anlage im Bereich der Schweißnaht. Darunter leidet darüber hinaus die Passform des Fenster- oder Türrahmens. Undichtigkeiten und Schwergängigkeit sind die Folgen.

Andererseits ist es im Bereich der meist form- oder kraftschlüssig eingebrachten Dichtungen schwierig, die Materialansammlungen auf herkömmlichem Wege mittels eines zum Verputzen verwendeten Messers abzustechen oder mittels eines Fräsers zu entfernen.

Zur Beseitigung oder zur Verhinderung der Materialansammlungen ist es im Stand der Technik bekannt, Material an den zu verschweißenden Enden der Profilstäbe vor dem Schweißvorgang spanend zu entfernen. Dazu wird ein speziell konturierter Fräser eingesetzt, der im Bereich der Dichtungen Material des Kunststoffprofils abträgt (siehe DE 10148265, JP2006 062436). Problematisch dabei ist jedoch, dass die Profile zunächst recht hohe Toleranzen aufweisen, sodass ein automatisches Abfräsen sehr schwierig ist. Insbesondere, wenn das Profil von den Vorgaben abweicht, aber auch bei maßhaltigen Profilen, kann durch den Fräser die Dichtung beschädigt werden und die Dichteigenschaft nicht mehr gewährleistet sein. Weiterhin problematisch bei diesem Verfahren ist, dass das Verfahren einen weiteren Arbeitsschritt erfordert, der die Taktzeit, also die Herstellungszeit zur Herstellung eines Fensterrahmens, erhöht. Die Fensterrahmen werden dadurch insgesamt teurer.

Ein weiterer allgemein bekannter Ansatz sieht vor, die Materialansammlungen nach dem Schweißen zu entfernen. Dies kann entweder manuell mit Handwerkzeugen oder durch spezielle Eckenputzautomaten geschehen. Das manuelle Bearbeiten ist jedoch sehr aufwändig und erfordert zusätzliches Personal, was die Rahmen erheblich verteuert. Die Eckenputzautomaten können den Bereich der Dichtungen nur eingeschränkt bearbeiten und können darüber hinaus ebenfalls zu Beschädigungen an den Dichtungen hervorrufen, da die Eckenputzautomaten die Dichtung untergreifen müssen.

Schließlich ist es allgemein bekannt, die Dichtungen in den Schweißautomaten und das Kunststoffmaterial der Profilstäbe mittels Stempeln umzuformen. Die Stempel drücken auf die durch das Erhitzen mittels des Schweißspiegels plastisch verformbaren Dichtungen und formen sie dadurch um. Dies ist jedoch technisch komplex und erfordert eine aufwendige Umrüstung der Schweißautomaten. Darüber hinaus wird die Funktion der Dichtung beeinträchtigt, da die Oberflächeneigenschaften der Dichtungen sich in dem Bereich einerseits verändern und andererseits die Dichtungen ein anderes, mehr oder weniger zufälliges Profil annehmen. Hinzu kommt, dass das Kunststoffmaterial nicht vollständig mittels des Stempels zurückverformt werden kann.

### Aufgabe

Aufgabe der Erfindung ist es somit, ein Verfahren und eine Vorrichtung zum Verschweißen von Kunststoffprofilstäben, welche die Nachteile aus dem Stand der Technik überwinden und insbesondere zu einer einwandfreien Verbindung zweier Kunststoffprofilstäbe mit bereits eingelegter Dichtung führt, wobei die Dichtung nicht beschädigt und in ihrer Funktion nicht beeinträchtigt wird.

### Darstellung der Erfindung

Die Aufgabe wird gelöst durch ein Verfahren gemäß dem Anspruch 1 und durch eine, Vorrichtung gemäß dem nebengeordneten Anspruch 5.

Das erfindungsgemäße Verfahren zum Verschweißen von Kunststoffprofilstäben, welches bei den zuvor beschriebenen, bereits teilweise mit Dichtungen versehenen Kunststoffprofilstäben zum Einsatz kommt, sieht vor, dass vor oder während des Erhitzens oder vor dem Aneinanderpressen von zu verschweißenden Flächen der Kunststoffprofilstäbe Material des oder der Profilstäbe im Bereich der wenigstens einen Dichtung verdrängt wird.

Dies hat den Vorteil, dass einerseits die Dichtung nicht beschädigt wird und dass sich auf der anderen Seite beim Aneinanderpressen bzw. Fügen der Profilstäbe kein Kunststoffmaterial mehr im Bereich der Dichtungen derart aufwerfen kann, dass die Funktion der Dichtungen beeinträchtigt wäre. Entgegen den aus dem Stand der Technik bekannten Verfahren, die ein spanendes Abtragen mittels Fräsern oder dergleichen vorsehen, wird gleichzeitig die Dichtung geschont und es wird verhindert, dass die Profile aufwändig nachbearbeitet werden müssen bzw. nicht mehr nachbearbeitbar sind, da die Profilstruktur im Fügebereich derart beschädigt ist, dass die Dichtungen nicht mehr sauber gehalten sind.

Das Durchführen des Verfahrens vor oder während des Erhitzens oder vor dem Aneinanderpressen der zu verschweißenden Enden, welches direkt in einer Schweißvorrichtung, mittels der das Verfahren durchgeführt wird, vorgenommen werden kann, ermöglicht, die Taktzeiten zur Herstellung der Tür- oder Fensterrahmen nahezu unverändert beizubehalten.

Verdrängen bedeutet im Sinne der Erfindung insbesondere, dass das Material des oder der Profilstäbe verschoben wird, aber einstückig mit dem oder den Profilstäben verbunden bleibt. Dies entspricht insbesondere einer Verformung des oder der Profilstäbe.

Nach einer ersten vorteilhaften Ausgestaltung ist vorgesehen, dass das Material des oder der Profilstäbe mechanisch verdrängt wird. Mechanisches Verdrängen lässt sich mittels entsprechender Verdrängungselemente besonders leicht bewerkstelligen.

Von Vorteil ist dabei weiterhin, wenn das verdrängte Material des oder der Profilstäbe vor dem Verdrängen angeschmolzen wird. Dies reduziert die notwendigen Kräfte zur Verdrängung und erlaubt eine besonders saubere und definiert Verdrängung von Kunststoffmaterial.

Bevorzugt wird zwischen 1 mm und 25 mm, insbesondere 1 mm bis 6 mm Höhe und Tiefe und 8 bis 15 mm in Länge an Material verdrängt. Dieses verdrängte Volumen reicht aus, damit sich beim Fügen der Profilstäbe keine Kunststoffansammlungen aufwerfen, die die Funktion der Dichtungen beeinträchtigen können.

Besonders vorteilhaft ist, wenn das Material gemäß einem vorgegebenen Profil verdrängt wird. Eine Verdrängung mit einem definierten Profil erzeugt definierte Rücksprünge, deren Eigenschaften sich besonders gut vorhersagen lassen, sodass besonders gut funktionierende Fenster oder Türen herstellbar sind.

Das vorgegebene Profil ist besonders bevorzugt quader-, nocken-, keil- oder doppelkeilförmig oder kammartig ausgebildet. Mit diesen Profilen lässt sich eine besonders saubere Materialverdrängung gewährleisten.

Ein weiterer unabhängiger Erfindungsgedanke sieht eine Vorrichtung zum Verschweißen von Kunststoffprofilstäben, von denen wenigstens einer eine Dichtung aufweist, vor. Die Vorrichtung ist mit wenigstens einer Spannvorrichtung zum Einspannen der Profilstäbe und mit wenigstens einem Anschlag zum Ausrichten der Profilstäbe in der Vorrichtung ausgestattet und weist weiterhin wenigstens eine Heizvorrichtung zum Erhitzen von wenigstens einer der zu verschweißenden Flächen der Profilstäbe auf. Wenigstens ein an dem Anschlag angeordnetes und/oder an der Heizvorrichtung angeordnetes und/oder in einem durch die zu verschweißenden Profilstäbe gebildeten Zwischenraum einbringbares Verdrängungselement zum Verdrängen von Material des oder der Profilstäbe ist im Bereich der wenigstens einen Dichtung der Profilstäbe vorgesehen.

Mit der erfindungsgemäßen Vorrichtung lassen sich die gleichen Vorteile erreichen wie mit dem erfindungsgemäßen Verfahren.

Eine bevorzugte Ausgestaltung der Erfindung sieht vor, dass die Verdrängungselemente als Druckstück an dem Anschlag und/oder an der Heizvorrichtung ausgebildet sind. Derartige Verdrängungselemente lassen sich leicht bezüglich der Profilstäbe positionieren, was eine besonders einfache und exakte Bearbeitung ermöglicht.

Vorteilhafterweise sind das oder die Verdrängungselemente verstellbar, schnellwechselbar und/oder steckbar, wobei bevorzugt mehrere Steckpositionen vorgesehen sind. Dadurch lässt sich eine Anpassung auf verschiedene Profiltypen mit verschiedenen Geometrien und verschiedenen Lagen der Dichtungen verwirklichen.

Besonders bevorzugt ist der Anschlag und/oder die Heizvorrichtung manuell und/oder automatisch austauschbar und/oder schnellwechselbar. Anschläge sowie Heizvorrichtung sind einerseits Verschleißteile, wobei die Verdrängungselemente besonderen Belastungen ausgesetzt sind, sodass diese von Zeit zu Zeit ausgetauscht oder überholt werden müssen. Um den Betrieb der Vorrichtung nicht unnötig lange stillzulegen, ist es erforderlich, Anschläge und/oder Heizvorrichtungen möglichst zügig austauschen zu können. Darüber hinaus können auf diese Weise unterschiedliche Anschläge und/oder Heizvorrichtungen vorgesehen werden, deren Verdrängungselemente in verschiedenen Positionen angebracht sind, sodass eine besonders einfache Anpassung auf unterschiedliche Profile möglich ist.

Eine weitere Ausgestaltung der Erfindung sieht vor, dass das oder die Verdrängungselemente quader-, nocken-, keil- oder doppelkeilförmig oder kammartig ausgebildet sind. Mit derartigen Geometrien lassen sich besonders gut definierte Materialverdrängungen erreichen.

Eine alternative bevorzugte Ausgestaltung sieht vor, dass das Verdrängungselement als separates Element ausgebildet ist. Ein separates Element ist besonders flexibel einsetzbar.

Vorteilhafterweise ist das separate Verdrängungselement mittels einer Zustellvorrichtung verstellbar. Die Zustellvorrichtung erlaubt ein besonders einfaches Einstellen des Verdrängungselements, insbesondere wenn die Zustellvorrichtung motorisch angetrieben ist.

Wenn die Zustellvorrichtung parallel zu einer durch eine jeweilige Fügeflächen der Profile gebildete Ebene verfahrbar ist, ergibt sich der weitere Vorteil, dass mit nur einem Verdrängungselement mehrere Dichtungen bearbeitbar sind.

Von besonderem Vorteil ist, wenn das Verdrängungselement beheizbar ist. Dann lässt sich das Kunststoffmaterial beim Verdrängen anschmelzen und die notwendige Kraft zur Bearbeitung der Kunststoffvorrichtung wird reduziert.

Eine weitere bevorzugte Ausführungsform des Verdrängungselements sieht vor, dass an dem Verdrängungselement ein Positionierungsanschlag zugeordnet ist, der eine automatische Positionierung des Verdrängungselements an den Profilstäben erlaubt. Dann ist eine komplizierte Steuerung des Verdrängungselements überflüssig, es reicht, wenn das Verdrängungselement aktiviert wird, sobald die Profilstäbe ausgerichtet sind und der Vorschub der Zustellvorrichtung des Verdrängungselements abgeschaltet wird, sobald der Positionieranschlag das Kunststoffprofil berührt.

Die Heizvorrichtung ist vorzugsweise als Heizspiegel ausgebildet.

Ein weiterer Vorteil ergibt sich, wenn Verdrängungselemente jeweils an einem Anschlag und/oder an einem separaten Verdrängungselement sowie an einem Heizspiegel vorgesehen sind. In aller Regel sind bei den betreffenden Fenster- oder Türrahmen mehrere Dichtungen vorgesehen, die verteilt über den Profilquerschnitt angeordnet sind. Durch die Verteilung mehrerer Verdrängungselemente auf Anschlag, Heizspiegel und/oder separatem Verdrängungselement, können mehrere Dichtungen gleichzeitig bearbeitet werden.

Weiterhin ist mit besonderem Vorteil vorgesehen, dass Anschlag, Heizvorrichtung und/oder separates Verdrängungselement antihaftbeschichtet sind. Auf diese Weise lässt sich verhindern, dass aufgeschmolzenes und/oder zu verdrängendes Profilmaterial an den entsprechenden Bauteilen anhaftet. Darüber hinaus lässt sich auf diese Weise eine glattere Profiloberfläche erzeugen.

Eine weitere Ausgestaltung der Erfindung sieht vor, dass die Heizvorrichtung und/oder der Anschlag verstellbar sind. Die Verstellbarkeit ist bevorzugt in einer durch die zu verschweißenden Profiloberfläche definierten Ebene vorgesehen. Hierdurch können besonders leicht unterschiedliche Profilquerschnitte mit unterschiedlichen Lagen der Dichtungen mit derselben Vorrichtung bearbeitet werden.

Eine weitere bevorzugte Ausgestaltung sieht mehrteilige, bevorzugt zweiteilige, Heizvorrichtungen und/oder Anschläge vor, deren Teile gegeneinander verstellbar sind. Dabei sind Verdrängungselemente an verschiedenen der Teile angeordnet. Dies erhöht die Einsetzbarkeit der Vorrichtung, da Heizvorrichtung und/oder Anschlag besonders gut an unterschiedliche Profile anpassbar sind.

Nach einer Weiterbildung der Erfindung ist vorgesehen, dass das oder die an dem Anschlag vorgesehenen und/oder die separaten Verdrängungselemente beheizt sind, damit die Materialverdrängung an den Profilen durch plastische Verformung vorgenommen werden kann.

Die Heizung heizt bevorzugt auf eine Temperatur von über 180°C, bevorzugt über 210°C und unter 280°C, besonders bevorzugt etwa 230°C.

Ein weiterer Gedanke sieht eine Heizvorrichtung zum Erhitzen von zu verschweißenden Flächen von Kunststoffprofilstäben vor, von denen wenigstens einer eine Dichtung aufweist, wobei an der Heizvorrichtung wenigstens ein Verdrängungselement zum Verdrängen von Material des oder der Profilstäbe im Bereich der wenigstens einen Dichtung vorgesehen ist.

Eine derartige Heizvorrichtung lässt sich auch in bestehenden Schweißvorrichtungen nachrüsten und erlaubt durch nur geringfügige Anpassungen der Steuerung die Durchführung des erfindungsgemäßen Verfahrens an bereits bestehenden Schweißvorrichtungen.

Dabei ist die Heizvorrichtung vorzugsweise als Heizspiegel ausgebildet. Heizspiegel haben sich zur Erwärmung von Kunststoffprofilstabenden, die miteinander verschweißt werden sollen, bewährt.

Vorteilhafterweise sind das oder die Verdrängungselemente als Druckstück an der Heizvorrichtung ausgebildet. Druckstücke an der Heizvorrichtung lassen sich besonders leicht realisieren.

Weiterhin ist mit Vorteil vorgesehen, dass das oder die Verdrängungselemente verstellbar, schnellwechselbar und/oder steckbar sind und/oder dass mehrere Steckpositionen für die Verdrängungselemente vorgesehen sind. Damit lässt sich eine besonders flexible Anpassung des Heizelements auf unterschiedliche Profilarten erreichen.

Ein weiterer Vorteil ergibt sich, wenn die Heizvorrichtung manuell und/oder automatisch austauschbar und/oder schnellwechselbar ist. Dadurch lassen sich Verzögerungen bei der Bearbeitung vermeiden und eine möglichst große Vielzahl von unterschiedlichen Profilquerschnitten verarbeiten.

Als geeignete Geometrien für das oder die Verdrängungselemente haben sich quader-, nocken-, keil- oder doppelkeilförmige oder kammartige Geometrien erwiesen. Mit den derartigen Geometrien lässt sich eine definierte Verdrängung erreichen.

Wenn die Heizvorrichtung und/oder die Verdrängungselemente antihaftbeschichtet sind, kann ein Anhaften von Profilmaterial beim Erhitzen und Verdrängen verhindert werden.

Die Heizvorrichtung ist gemäß einer Weiterbildung bevorzugt verstellbar, insbesondere in einer durch eine jeweilige Verbindungsebene der zu verschweißenden Profilflächen gebildeten Ebene. Auf diese Weise lässt sich die Heizvorrichtung für mehrere unterschiedliche Profile einsetzen.

Eine weitere bevorzugte Ausgestaltung sieht mehrteilige, bevorzugt zweiteilige, Heizvorrichtungen vor, deren Teile gegeneinander verstellbar sind. Dabei sind Verdrängungselemente an verschiedenen der Teile angeordnet. Dies erhöht die Einsetzbarkeit der Vorrichtung, da Heizvorrichtung besonders gut an unterschiedliche Profile anpassbar sind.

Ein weiterer unabhängiger Gedanke der Erfindung sieht einen Anschlag zum Positionieren von Kunststoffprofilstäben, von denen wenigstens einer wenigstens eine Dichtung aufweist, insbesondere zur Herstellung von Fenster- oder Türrahmen vor, bei dem an dem Anschlag wenigstens ein Verdrängungselement zum Verdrängen von Material des oder der Profilstäbe im Bereich der einen Dichtung vorgesehen ist. Damit lassen sich die bereits zuvor beschriebenen Vorteile erreichen.

Vorteilhafterweise sind das oder die Verdrängungselemente als Druckstück an dem Anschlag ausgebildet. Druckstücke haben sich als besonders funktionell erwiesen.

Besonders bevorzugt werden Verdrängungselemente eingesetzt, die verstellbar, schnellwechselbar und/oder steckbar sind und/oder für die mehrere Steckpositionen vorgesehen sind. Dies erhöht die Flexibilität des erfindungsgemäßen Anschlags.

Ein weiterer Vorteil wird erreicht, wenn der Anschlag manuell und/oder automatisch austauschbar und/oder schnellwechselbar ist. Hierdurch werden Verzögerungen bei der Bearbeitung einer Vielzahl von Fensterprofilen vermieden.

Als besonders geeignete Geometrien für das oder die Verdrängungselemente haben sich quader-, nocken-, keil- oder doppelkeilförmige oder kammartige Geometrien herausgestellt, welche allesamt eine besonders gute Verdrängung von Material erlauben.

Bevorzugt ist das Verdrängungselement antihaftbeschichtet, damit kein Profilmaterial an dem Verdrängungselement anhaftet.

Eine weitere Ausgestaltung der Erfindung sieht vor, dass der Anschlag verstellbar ist. Die Verstellbarkeit ist bevorzugt in einer durch die zu verschweißenden Profiloberfläche definierten Ebene vorgesehen. Hierdurch können besonders leicht unterschiedliche Profilquerschnitte mit unterschiedlichen Lagen der Dichtungen mit derselben Vorrichtung bearbeitet werden.

Eine weitere bevorzugte Ausgestaltung sieht mehrteilige, bevorzugt zweiteilige, Anschläge vor, deren Teile gegeneinander verstellbar sind. Dabei sind Verdrängungselemente an verschiedenen der Teile angeordnet. Dies erhöht die Einsetzbarkeit der Vorrichtung, da der Anschlag besonders gut an unterschiedliche Profile anpassbar sind.

Wenn das Verdrängungselement weiterhin separat beheizt ist, lässt sich eine besonders einfache und definierte Materialverdrängung durch plastische Verformung der Profile erreichen.

Es zeigen:
- Figur 1a: eine perspektivische schematische Darstellung eines Ausschnitts einer erfindungsgemäßen Vorrichtung gemäß einer ersten Ausführungsform während des Ausrichtens von Kunststoffprofilflächen;
- Figur 1b: eine Vergrößerung aus Figur 1 a;
- Figur 2a: eine perspektivische schematische Darstellung der Vorrichtung aus Figur 1a nach dem Ausrichten;
- Figur 2b: eine Vergrößerung aus Figur 2a;
- Figur 3a: eine perspektivische schematische Darstellung eines Ausschnitts einer erfindungsgemäßen Vorrichtung gemäß einer zweiten Ausführungsform zu Beginn eines Schweißvorganges;
- Figur 3b: ein vergrößerter Ausschnitt aus Figur 3a;
- Figur 4a: die Vorrichtung aus Figur 3a nach dem Erhitzen von Profilflächen;
- Figur 4b: eine Vergrößerung aus Figur 4a
- Figur 5a: eine schematische perspektivische Darstellung eines Ausschnitts aus einer dritten Ausführungsform der Erfindung mit separatem Verdrängungselement;
- Figur 5b: eine Vergrößerung aus Figur 5a;
- Figur 6a: die Vorrichtung aus Figur 5a nach Bearbeitung der Profile mit dem erfindungsgemäßen Verfahren;
- Figur 6b: eine Vergrößerung aus Figur 6a.
- Fig. 7a: eine schematische Draufsicht auf eine bevorzugte Abwandlung der dritten Ausführungsform der Erfindung;
- Fig. 7b: eine Vergrößerung aus Fig. 7a;
- Fig. 8a: die Abwandlung nach Fig. 7a in einer schematischen perspektivischen Darstellung;
- Fig. 8b: eine Vergrößerung aus Fig. 8a;
- Fig. 9a: eine perspektivische schematische Darstellung eines Ausschnitts aus einer Vorrichtung mit einem erfindungsgemäßen Heizelement;
- Fig. 9b: eine Vergrößerung des Heizelements aus Fig. 9a;
- Fig. 10a: eine perspektivische schematische Darstellung eines Ausschnitts aus einer Vorrichtung mit alternativer Ausführungsform des erfindungsgemäßen Heizelements sowie
- Fig. 10b: ein vergrößerter Ausschnitt aus Fig. 10a.

Zur besseren Übersichtlichkeit werden die Bezugszeichen für gleiche oder gleich wirkende Bauteile in sämtlichen dargestellten Ausführungsbeispielen beibehalten.

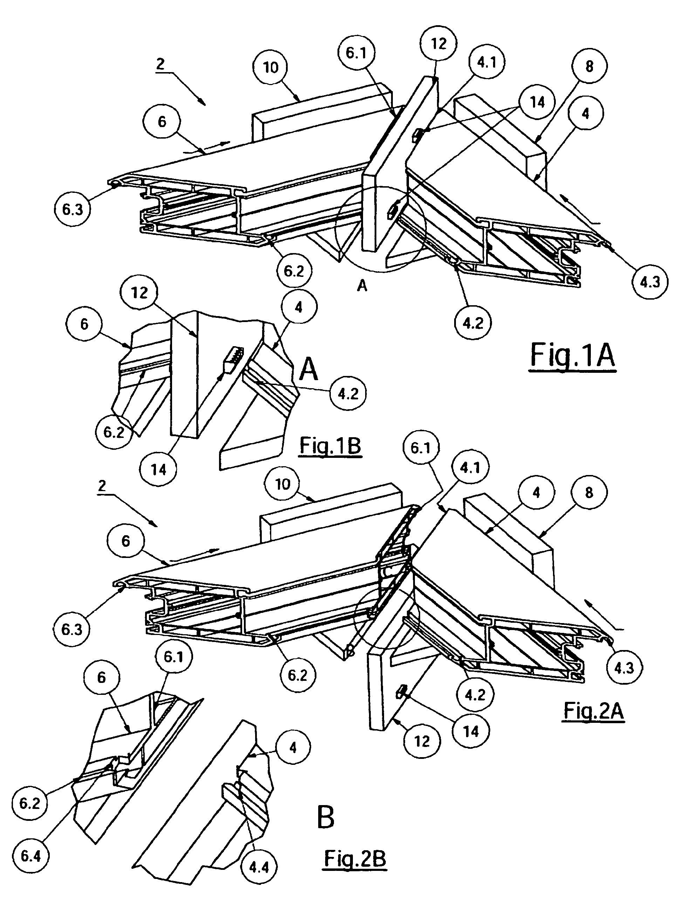

Figur 1a zeigt eine perspektivische Darstellung eines Ausschnitts aus einer erfindungsgemäßen Vorrichtung 2 gemäß einer ersten Ausführungsform.

Die Vorrichtung 2 dient zum Verschweißen zweier Kunststoffprofilstäbe 4, 6 an ihren jeweiligen Flächen 4.1, 6.1 unter Verwendung eines in diesem Ausführungsbeispiel nicht dargestellten Heizspiegels.

Die Kunststoffprofilstäbe 4, 6 weisen Dichtungsnuten 4.2, 4.3, 6.2, 6.3 auf, in die bereits ab Werk eine Dichtung eingebracht ist. In den nachfolgend dargestellten Ausführungsbeispielen ist die Dichtung jeweils nicht gezeigt, um die Wirkungsweise der jeweils dargestellten Vorrichtung sichtbar zu machen, in den tatsächlichen Umsetzungen ist die Dichtung jedoch vorhanden.

Die Kunststoffprofilstäbe 4, 6 sind in zwei nur schematisch angedeuteten Spannvorrichtungen 8, 10 eingespannt, welche die Profile 4, 6 rechtwinklig soweit aufeinander zu bewegen können, dass die entsprechenden Profilflächen 4.1, 6.1 zur Anlage kommen beziehungsweise gefügt werden. Zwischen den Profilflächen 4.1, 6.1 ist ein Anschlag 12 vorgesehen, welcher, wie aus Figur 2a ersichtlich, zwischen die Profilflächen 4.1, 6.1 einfahrbar ist.

Die erfindungsgemäße Vorrichtung 2 weist nun auf den beiden den Profilflächen 4.1, 6.1 zugewandten Flächen des Anschlages 12 Verdrängungselemente 14 auf, welche, wie in Figur 1b ersichtlich, in exakt dem Bereich angeordnet sind, in welchem die Dichtungsnuten 4.2, 4.3, 6.2, 6.3 der Profile 4, 6 an dem Anschlag 12 zur Anlage kommen.

Die Profile 4, 6 werden so weit zugestellt, bis die Profilflächen 4.1, 6.1 im Wesentlichen vollflächig an dem Anschlag 12 anliegen. Beim Zustellen der Profile 4, 6 entlang der durch die Pfeile dargestellten Richtungen auf den Anschlag 12 kommen zunächst die Profilflächen 4.1, 6.1 in dem Bereich der Dichtungsnuten 4.2, 4.3, 6.2, 6.3 in Anlage mit den Verdrängungselementen 14, woraufhin Kunststoffmaterial im Bereich der Dichtungsnuten 4.2, 4.3, 6.2, 6.3 entgegen der Zustellrichtung und seitlich zur Schnittebene der Profilflächen 4.1, 6.1 in einer Tiefe und Höhe von ca. 2 mm und in einer Länge von ca. 6 mm mechanisch verdrängt wird.

Nachdem das Material in den Bereichen verdrängt wurde, werden die Profile 4, 6 mit ihren Profilflächen 4.1, 6.1 weiter auf den Anschlag 12 zugestellt und die Profilflächen 4.1, 6.1 gelangen in die erforderliche Anlagestellung mit dem Anschlag 12.

Der Anschlag 12 ist manuell schnellwechselbar, um die Vorrichtung 2 an unterschiedliche Profile anpassen zu können. Unterschiedliche Profile haben Dichtungen in unterschiedlichen Profilhöhen. Darüber hinaus ist es möglich, dass an derselben Vorrichtung auch Profile ohne eingebrachte Dichtungen verarbeitet werden, welche, wie im Stand der Technik üblich, ohne Materialverdrängung miteinander verschweißt werden können. Auch eine automatische Schnellwechslung ist möglich.

In einer weiteren, nicht dargestellten Ausführungsform sind die Verdrängungselemente selbst schnell wechselbar, beispielsweise steckbar ausgebildet oder in einer Nut verschiebbar, wobei der Anschlag 12 dann eine Mehrzahl von Steckplätzen aufweist, in die die Verdrängungselemente einsteckbar sind.

Figur 1b zeigt den Ausschnitt A aus Figur 1a in vergrößerter Darstellung, um die Lagebeziehung zwischen Verdrängungselement 14 und Dichtungsnut 4.2 des Profils 4 zu verdeutlichen.

Das Verdrängungselement 14 ist im dargestellten Ausführungsbeispiel kammartig ausgebildet, was ein einfaches Verdrängen des Kunststoffmaterials ermöglicht. Als weitere Geometrien für das Verdrängungselement 14 haben sich quaderförmige, nockenförmige oder, wie im nachfolgenden Ausführungsbeispiel beschrieben, keil- bzw. doppelkeilförmige Geometrien als geeignet erwiesen.

Figur 2a zeigt die Vorrichtung aus Figur 1a nach dem Positionieren der Profilflächen 4.1, 6.1. Der Anschlag 12 wurde dabei aus dem zwischen den Profilflächen 4.1, 6.1 gebildeten Zwischenraum entfernt.

In der vergrößerten Darstellung gemäß Figur 2b ist zu erkennen, dass im Bereich der Führungsnut 6.2 ein Rücksprung 6.4 und an dem Profil 4 im Bereich der Führungsnut 4.2 ein Rücksprung 4.4 gebildet ist. Beim Aufeinanderpressen der Profile 4, 6 kann sich in den Bereichen der Rücksprünge 4.4, 6.4 kein Material mehr aufwerfen, sodass die Dichtungen in der erforderlichen Position gehalten werden und nicht aufgeworfen werden.

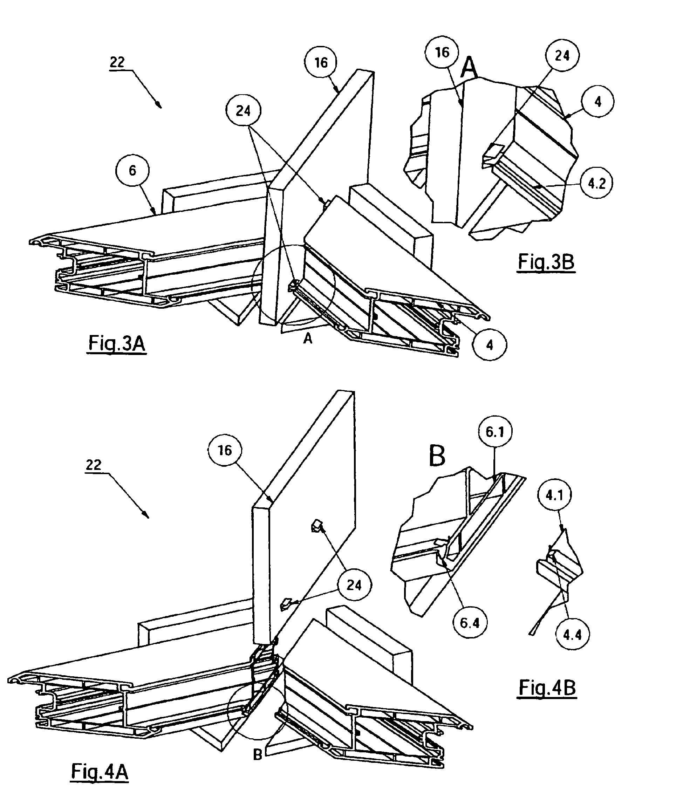

Figur 3a zeigt eine zweite Ausführungsform einer erfindungsgemäßen Vorrichtung 22.

Zwischen den Profilflächen 4.1, 6.1 ist ein Heizspiegel 16 vorgesehen, welcher, wie aus Figur 4a ersichtlich, zwischen die Profilflächen 4.1, 6.1 einfahrbar ist. Der Heizspiegel 16 wird auf eine ausreichend hohe Temperatur, beispielsweise über 250 °C erhitzt und ist an seiner Oberfläche mit einem hitzebeständigen, nicht haftenden Material beschichtet, damit die Kunststoffprofile 4, 6 nicht an dem Heizspiegel 16 kleben bleiben.

Die erfindungsgemäße Vorrichtung 22 weist nun auf den beiden den Profilflächen 4.1, 6.1 zugewandten Flächen des Heizspiegels 16 Verdrängungselemente 24 auf, welche, wie in Figur 1b ersichtlich, in exakt dem Bereich angeordnet sind, in welchem die Dichtungsnuten 4.2, 4.3, 6.2, 6.3 der Profile 4, 6 an dem Heizspiegel 16 zur Anlage kommen. Die Verdrängungselemente 24 werden durch den Heizspiegel 16 mit beheizt und führen beim Zustellen der Profile 4, 6 entlang der durch die Pfeile dargestellten Richtungen auf den Heizspiegel 16 dazu, dass zunächst die Profilflächen 4.1, 6.1 in dem Bereich der Dichtungsnuten 4.2, 4.3, 6.2, 6.3 in Anlage mit dem Heizspiegel 16 gelangen. Dadurch wird angeschmolzenes Kunststoffmaterial im Bereich der Dichtungsnuten 4.2, 4.3, 6.2, 6.3 entgegen der Zustellrichtung und seitlich zur Schnittebene der Profilflächen 4.1, 6.1 in einer Tiefe von ca. 2 mm verdrängt.

Nachdem das Material in den Bereichen verdrängt wurde, werden die Profile 4, 6 mit ihren Profilflächen 4.1, 6.1 weiter auf den Heizspiegel 16 zugestellt und die Profilflächen 4.1, 6.1 gelangen in Anlagestellung mit dem Heizspiegel 16 und werden auf eine Temperatur oberhalb der Schmelztemperatur des Profilmaterials erhitzt.

Der Heizspiegel 16 ist manuell schriellwechselbar, um die Vorrichtung 22 an unterschiedliche Profile anpassen zu können. Auch ein automatisches Schnellwechseln ist möglich. Unterschiedliche Profile haben Dichtungen in unterschiedlichen Profilhöhen, darüber hinaus ist es möglich, dass Profile ohne eingebrachte Dichtungen verarbeitet werden, welche, wie im Stand der Technik üblich, ohne Materialverdrängung miteinander verschweißt werden.

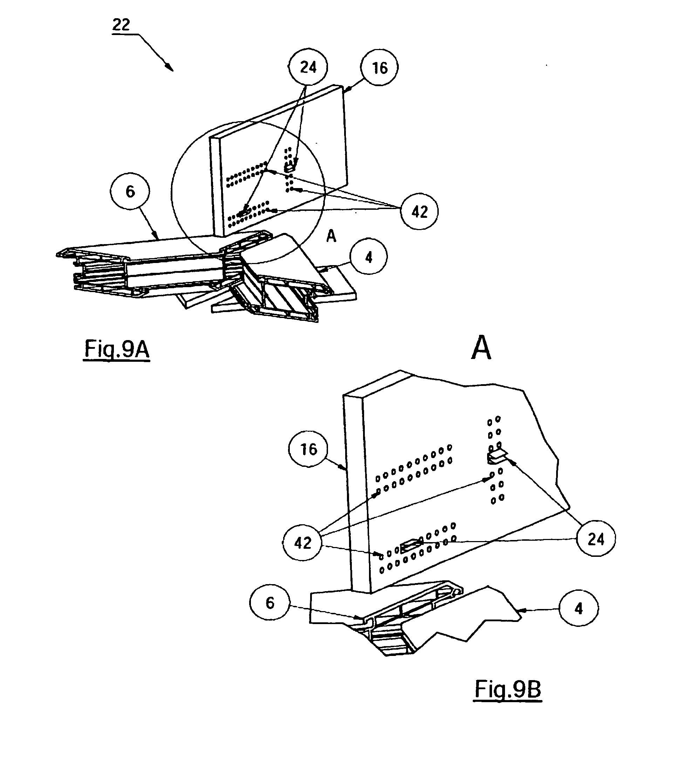

In einer weiteren Ausführungsform, wie in den Figuren 9a bis 10b dargestellt werden wird, sind die Verdrängungselemente selbst schnell wechselbar, beispielsweise steckbar oder in einer Nut verschiebbar ausgebildet, wobei der Heizspiegel 16 dann eine Mehrzahl von Steckplätzen aufweist, in die die Verdrängungselemente einsteckbar sind.

In dem in Figur 3a dargestellten Ausführungsbeispiel der erfindungsgemäßen Vorrichtung 22 sind an dem Heizspiegel 16 Verdrängungselemente 24 vorgesehen, welche gegenüber der zuerst dargestellten Ausführungsform gemäß den Figuren 1a bis 2b jeweils eine Keilform aufweisen und, wie in Figur 3b ersichtlich, das Profil 4 im Bereich der Dichtungsnut 4.2 keilförmig nach hinten verdrängen.

Die keilförmigen Verdrängungselemente 24 sind dabei so ausgebildet, dass die nicht dargestellten Dichtungen zumindest teilweise untergriffen werden, sodass die Dichtungen bei der Materialverdrängung nach hinten verschoben werden.

Der untere Keil ist dabei so bezüglich des Profils ausgerichtet, dass er in Eingriff mit dem Kunststoffprofil gelangt, wohingegen der obere Keil die Dichtung selbst herunterdrückt, damit diese beim Verdrängen des Profilmaterials nicht aus der jeweiligen Nut herausgedrückt werden kann.

Dies führt, wie in den Figuren 4a, 4b dargestellt, zu Rücksprüngen 4.4', 6,4', welche ein definiertes Verschweißen der Profilflächen 4.1, 6.1 miteinander ermöglicht.

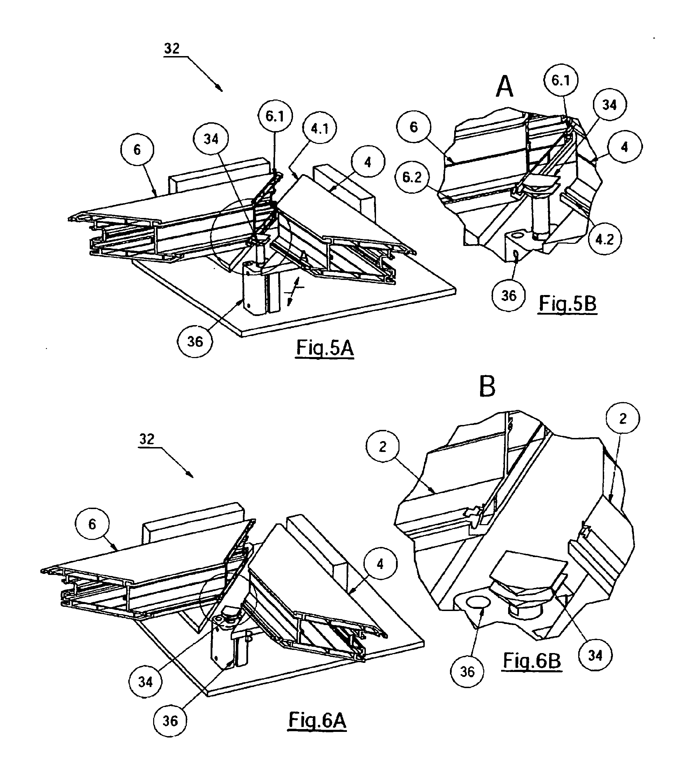

Die Figuren 5a bis 6b zeigen ein drittes Ausführungsbeispiel der Erfindung. Bei der dortigen Vorrichtung 32 sind keine Verdrängungselemente an einem Anschlag oder an einem Heizspiegel vorgesehen, sondern ein separates Verdrängungselement 34, welches mittels einer Zustellvorrichtung 36 in den durch die Profilflächen 4.1, 6.1 gebildeten Zwischenraum einfahrbar ist.

Das Verdrängungselement 34 gemäß dem dritten Ausführungsbeispiel ist hinsichtlich der in Anlagestellung mit den Profilen 4, 6 gelangenden Bereichen wie in dem zweiten Ausführungsbeispiel dargestellt, ebenfalls doppelprismatisch ausgebildet, um eine definierte Verdrängung von Material der Kunststoffrahmen 4, 6 zu erreichen und dabei den sicheren Sitz der Dichtungen zu gewährleisten.

Das Verdrängungselement 34 ist in dem dritten Ausführungsbeispiel beheizt, um das zu verdrängende Material in einen plastischen Zustand zu überführen und dadurch leichter und definierter verdrängen zu können. Alternativ ist jedoch auch ein unbeheiztes Verdrängungselement denkbar.

Das Verdrängungselement 34 wird mittels der Zustellvorrichtung 36 in einem Arbeitsschritt vor dem Einbringen des (nicht dargestellten) Heizspiegels eingesetzt, wodurch ein zusätzlicher Arbeitsschritt erforderlich ist. Vorteil der dritten Ausführungsform der Erfindung ist jedoch, dass das Verdrängungselement 34 ohne Weiteres in beliebige Positionen verfahren werden kann, sofern die Zustellvorrichtung 36 entlang des Profilquerschnitts verfahrbar ausgebildet ist. Dies ist von besonderem Vorteil, wenn, wie in der Praxis üblich, häufig wechselnde Profilarten verarbeitet werden, bei denen sich die Dichtungen an unterschiedlichen Orten befinden. Die dritte Ausführungsform erlaubt es zudem, auf einfache Weise ein automatisches Positionieren des Verdrängungselementes 34 zu verwirklichen, da Sensormittel vorgesehen sein können, mit denen automatisch die Lage der Dichtungen erkannt werden kann.

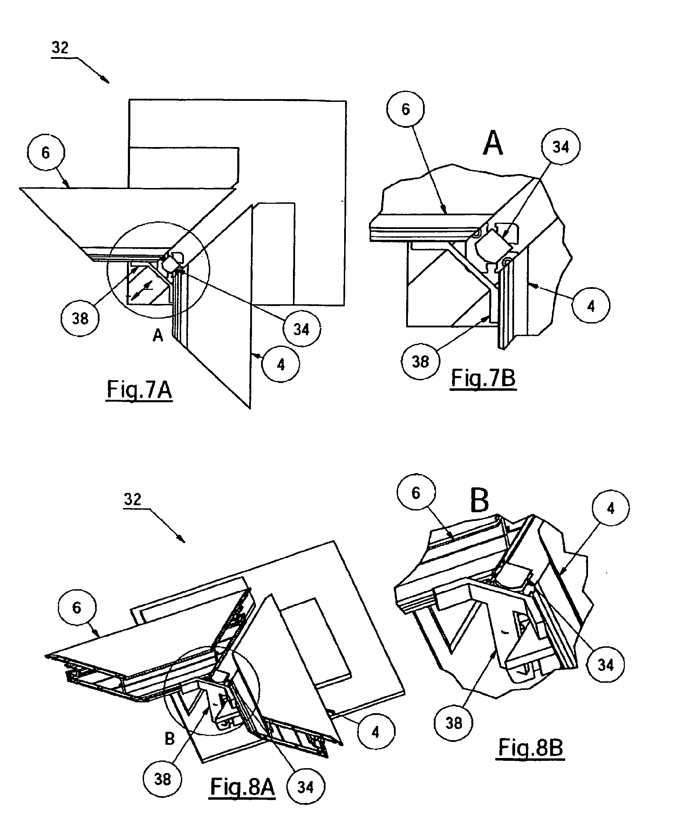

Figur 7a zeigt eine Draufsicht auf die dritte Ausführungsform der Vorrichtung 32 mit einem Verdrängungselement 34 mit einem zusätzlich vorgesehenen Positionieranschlag 38. Der Positionieranschlag 38 sorgt für ein automatisches Positionieren des Verdrängungselements 34 an den Profilstäben 4, 6. Profile eines Herstellers haben meist genormte Dichtungspositionen bezüglich der Außenkanten der Profilstäbe. Dies ermöglicht den Einsatz eines passivgesteuerten Positioniermittels, welches eine exakte Positionierung ohne zusätzlichen Programmier- oder Positionieraufwand des Verdrängungselements 34 ermöglicht.

Die Figuren 8a und 8b verdeutlichen die Ausgestaltung des Positionieranschlags 38 in perspektivischer schematischer Darstellung. Der Positionieranschlag ist im Wesentlichen T-förmig mit jeweils im 45°-Winkel zueinander abgewinkelten oberen Enden versehen, sodass diese Kontaktflächen zum Rahmen bilden, welche zueinander bezogen im 90°-Winkel stehen. Für Profile mit Sonderwinkeln sind die vorgenannten Winkel entsprechend anders zu wählen.

Figur 9a zeigt eine erfindungsgemäße Vorrichtung 22 gemäß der zweiten Ausführungsform mit einem Heizspiegel 16' gemäß einer ersten Ausführungsform.

Um die Erfindung bei möglichst vielen verschiedenen Profilen einsetzen zu können, ist bei einem Heizspiegel 16 vorgesehen, die Verdrängungselemente 14 steckbar in verschiedenen Steckpositionen einzubringen. Dazu ist ein Lochraster 42 vorgesehen, das es ermöglicht, sämtliche gängigen Profile mit dem erfindungsgemäßen Verfahren zu bearbeiten. Alternativ ist es auch möglich, den Anschlag 12 gemäß dem ersten dargestellten Ausführungsbeispiel mit steckbaren oder anderweitig schnell wechselbaren Verdrängungselementen auszustatten.

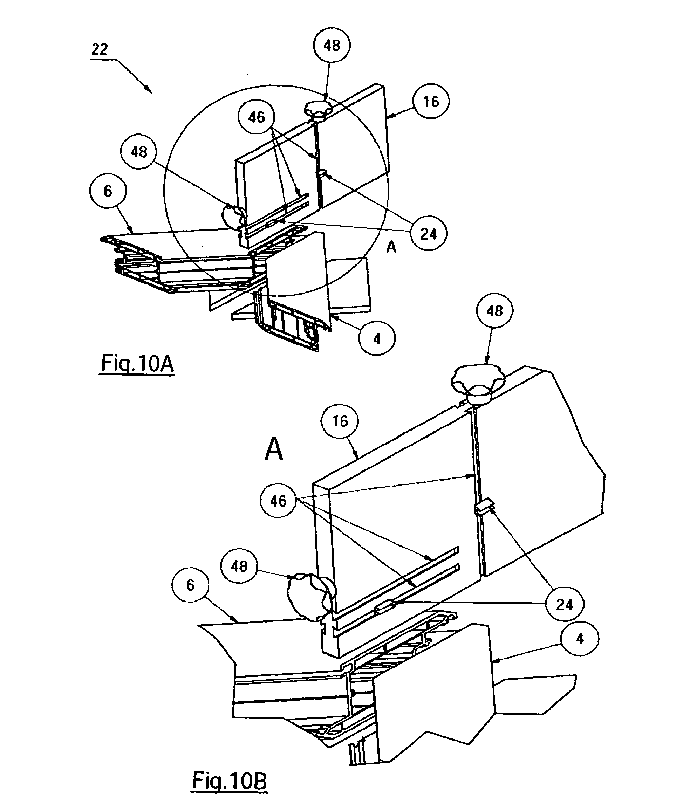

Die Figuren 10a und 10b zeigen einen weiteren erfindungsgemäßen Heizspiegel 16", welcher in einer erfindungsgemäßen Vorrichtung 22 vorgesehen sein kann. Die Verdrängungselemente 14 sind hier in Schwalbenschwanzführungen 46 geführt, welche mittels Verstellknöpfen 48 verstellbar sind. Dadurch wird eine noch variablere Anpassung auf die zu bearbeitenden Kunststoffprofile erreicht.

Weitere Ausführungsbeispiele können durch Kombinationen der gezeigten Ausführungsbeispiele erzeugt werden. So kann zum Beispiel vorgesehen sein, ein separates Verdrängungselement zusammen mit einem Heizspiegel mit Verdrängungselementen vorzusehen oder einen Anschlag mit wenigstens einem Verdrängungselement mit wenigstens einem Heizspiegel mit wenigstens einem Verdrängungselement.

Weiterhin können die Verdrängungselemente 14 sowie Anschlag 12, Heizspiegel 16, und dergleichen antihaftbeschichtet sein.

### Bezugszeichenliste

- 2: Vorrichtung
- 4: Erstes Kunststoffprofilstück
- 4.1: Erste Profilfläche
- 4.2, 4.3: Dichtungsnuten des ersten Kunststoffprofilstücks
- 4.4, 4.4': Rücksprung
- 6: Zweites Kunststoffprofilstück
- 6.1: Zweite Profilfläche
- 6.2, 6.3: Dichtungsnuten des zweiten Kunststoffprofilstücks
- 6.4, 6.4': Rücksprung
- 8, 10: Spannvorrichtungen
- 12: Anschlag
- 14: Verdrängungselemente
- 16: Heizspiegel
- 22: Vorrichtung
- 24: Verdrängungselemente
- 32: Vorrichtung
- 34: Verdrängungselement
- 36: Zustellvorrichtung
- 38: Positionieranschlag
- 42: Lochraster
- 46: Schwalbenschwanzführungen
- 48: Verstellknöpfe

## Patentansprüche

1. Verfahren zum Verschweißen von Kunststoffprofilstäben (4, 6), insbesondere zur Herstellung von Fenster- oder Türrahmen, bei dem zwei Kunststoffprofilstäbe (4, 6), von denen zumindest einer wenigstens eine Dichtung aufweist, an zumindest einer zu verschweißenden Fläche (4.1, 6.1) mittels einer Heizvorrichtung (16) erhitzt und sodann die Profilstäbe (4, 6) zur Herstellung einer Verbindung gegeneinander gepresst werden, **dadurch gekennzeichnet, dass** vor oder während des Erhitzens oder vor dem Aneinanderpressen der zu verschweißenden Flächen (4.1, 6.1) Material des oder der Profilstäbe (4, 6) im Bereich der wenigstens einen Dichtung verdrängt wird.

2. Verfahren nach Anspruch 1, **dadurch gekennzeichnet, dass** das zu verdrängende Material des oder der Profilstäbe (4, 6) vor dem Verdrängen angeschmolzen wird.

3. Verfahren nach einem der vorangegangenen Ansprüche, **dadurch gekennzeichnet, dass** das zwischen 1 mm bis 25 mm, vorzugsweise 1 mm bis 6 mm in Höhe und Tiefe und 8 mm bis 15 mm in Länge, an Material verdrängt wird.

4. Verfahren nach einem der vorangegangenen Ansprüche, **dadurch gekennzeichnet, dass** das Material gemäß einem vorgegebenen Profil verdrängt wird, das bevorzugt quader-, nocken-, keil- oder doppelkeilförmig oder kammartig ist.

5. Vorrichtung zum Verschweißen von Kunststoffprofilstäben (4, 6), von denen wenigstens einer eine Dichtung aufweist, insbesondere zur Herstellung von Fenster- oder Türrahmen, mit wenigstens einer Spannvorrichtung (8, 10) zum Einspannen der Profilstäbe (4, 6) und mit wenigstens einem Anschlag (12) zum Ausrichten der Profilstäbe (4, 6) in der Vorrichtung (2, 22, 32) sowie mit wenigstens einer Heizvorrichtung (16) zum Erhitzen von wenigstens einer der zu verschweißenden Flächen (4.1, 6.1) der Profilstäbe (4, 6), **dadurch gekennzeichnet, dass** wenigstens ein an dem Anschlag (12) angeordnetes und/oder an der Heizvorrichtung (16) angeordnetes und/oder in einen durch die zu verschweißenden Profilstäbe (4, 6) gebildeten Zwischenraum einbringbares Verdrängungselement (14, 24, 34) zum Verdrängen von Material des oder der Profilstäbe (4, 6) im Bereich der wenigstens einen Dichtung vorgesehen ist.

6. Vorrichtung nach Anspruch 5, **dadurch gekennzeichnet, dass** das oder die Verdrängungselemente als Druckstück (14, 24, 34) an dem Anschlag (12) und/oder an der Heizvorrichtung (16) und/oder an einer Positioniervorrichtung (36) ausgebildet sind.

7. Vorrichtung nach einem der Ansprüche 5 oder 6, **dadurch gekennzeichnet, dass** das oder die Verdrängungselemente (14, 24, 34) verstellbar, schnellwechselbar und/oder steckbar sind und/oder dass mehrere Steckpositionen vorgesehen sind, und/oder dass der Anschlag (12) und/oder die Heizvorrichtung (16) und/oder die Positioniervorrichtung (36) manuell und/oder automatisch austauschbar und/oder schnellwechselbar sind.

8. Vorrichtung nach einem der Ansprüche 5 bis 7, **dadurch gekennzeichnet, dass** das oder die Verdrängungselemente (14, 24, 34) quader-, nocken-, keil- oder doppelkeilförmig oder kammartig ausgebildet ist.

9. Vorrichtung nach einem der Ansprüche 5 bis 8, **dadurch gekennzeichnet, dass** das Verdrängungselement (34) als separates Element ausgebildet ist, das bevorzugt mittels einer Zustellvorrichtung (36) verstellbar ist, die parallel zu einer durch eine jeweilige Verbindungsebene der Profilflächen (4.1, 6.1) gebildeten Ebene verfahrbar ist.

10. Vorrichtung nach einem der Ansprüche 5 bis 9, **dadurch gekennzeichnet, dass** das Verdrängungselement (14, 24, 34) beheizbar ist.

11. Vorrichtung nach einem der Ansprüche 5 bis 10, **dadurch gekennzeichnet, dass** dem Verdrängungselement (14, 24, 34) ein Positionierungsanschlag (38) zugeordnet ist.

12. Vorrichtung nach einem der Ansprüche 5 bis 11, **dadurch gekennzeichnet, dass** je wenigstens ein Verdrängungselement (14, 24, 34) an einem Heizspiegel (16) und/oder an einem Anschlag (12) und/oder einem Positionieranschlag (38) vorgesehen sind.

13. Vorrichtung nach einem der Ansprüche 5 bis 12, **dadurch gekennzeichnet, dass** das Verdrängungselement (14, 24, 34) und/oder die Heizvorrichtung (16) antihaftbeschichtet sind.

14. Vorrichtung nach einem der Ansprüche 5 bis 13, **dadurch gekennzeichnet, dass** der Anschlag (12) und/oder die Heizvorrichtung (16) verstellbar sind, bevorzugt parallel zu einer durch eine jeweilige Verbindungsebene der Profilflächen (4.1, 6.1) gebildeten Ebene, wobei das Verdrängungselement (14, 24) bevorzugt jeweils fest an Anschlag (12) und/oder Heizvorrichtung (16) angeordnet ist.

15. Vorrichtung nach einem der Ansprüche 5 bis 14, **dadurch gekennzeichnet, dass** der Anschlag (12) und/oder die Heizvorrichtung (16) zumindest zweiteilig und gegeneinander verstellbar ausgebildet sind, wobei Verdrängungselemente (14, 24, 34) je an den gegeneinander verstellbaren Teilen des Anschlages (12) und/oder der Heizvorrichtung (16) angeordnet sind.

## Claims

1. Method of welding plastics material profile rods (4, 6), particularly for producing window or door frames, in which two plastics material profile rods (4, 6), of which at least one has at least one seal, are heated at at least one surface (4.1, 6.1), which is to be welded, by means of a heating device (16) and then the profile rods (4, 6) are pressed against one another for producing a connection, **characterised in that** before or during heating, or before the pressing together of the surfaces (4.1, 6.1) to be welded, material of the profile rod or rods (4, 6) is displaced in the region of the at least one seal.

2. Method according to claim 1, **characterised in that** the material to be displaced of the profile rod or rods (4, 6) is melted before the displacement.

3. Method according to any one of the preceding claims, **characterised in that** between 1 millimetre and 25 millimetres, preferably 1 millimetre to 6 millimetres in height and depth and 8 millimetres to 15 millimetres in length, of material is displaced.

4. Method according to any one of the preceding claims, **characterised in that** the material is displaced in accordance with a predetermined profile, which is preferably block-shaped, cam-shaped, wedge-shaped or double-wedge-shaped or comb-like.

5. Device for welding plastics material profile rods (4, 6), of which at least one has a seal, particularly for producing window or door frames, comprising at least one clamping device (8, 10) for clamping the profile rods (4, 6) in place and at least one abutment (12) for aligning the profile rods (4, 6) in the device (2, 22, 32) as well as at least one heating device (16) for heating at least one of the surfaces (4.1, 6.1), which are to be welded, of the profile rods (4, 6), **characterised in that** at least one displacing element (14, 24, 34), which is arranged at the abutment (12) and/or at the heating device (16) and/or is introducible into an intermediate space formed by the profile rods (4, 6) to be welded, for displacing material of the profile rod or rods (4, 6) is provided in the region of the at least one seal.

6. Device according to claim 5, **characterised in that** the displacing element or elements is or are constructed as a pressure member (14, 24, 34) at the abutment (12) and/or at the heating device (16) and/or at a positioning device (36).

7. Device according to one of claims 5 and 6, **characterised in that** the displacing element or elements (14, 24, 34) is or are adjustable, quick-changeable and/or pluggable and/or that several plug positions are provided and/or that the abutment (12) and/or the heating device (16) and/or the positioning device (36) is or are manually and/or automatically exchangeable and/or quick-changeable.

8. Device according to any one of claim 5 to 7, **characterised in that** the displacing element or elements (14, 24, 34) is or are constructed to be block-shaped, cam-shaped, wedge-shaped or double-wedge-shaped or comb-like.

9. Device according to any one of claims 5 to 8, **characterised in that** the spacing element (34) is constructed as a separate element which is preferably adjustable by means of an adjusting device (36) movable parallel to a plane formed by a respective connecting plane of the profile surfaces (4.1, 6.1).

10. Device according to any one claims 5 to 9, **characterised in that** the displacing element (14, 24, 34) is heatable.

11. Device according to any one of claims 5 to 10, **characterised in that** a positioning abutment (38) is associated with the displacing element (14, 24, 34).

12. Device according to any one of claims 5 to 11, **characterised in that** at least one respective displacing element (14, 24, 34) is provided at a heating reflector (16) and/or at an abutment (12) and/or at a positioning abutment (38).

13. Device according to any one of claims 5 to 12, **characterised in that** the displacing element (14, 24, 34) and/or the heating device (16) has an anti-adhesion coating.

14. Device according to any one of claims 5 to 13, **characterised in that** the abutment (12) and/or the heating device (16) is or are adjustable, preferably parallel to a plane formed by a respective connecting plane of the profile surfaces (4.1, 6.1), wherein the displacing element (14, 24) is preferably fixedly arranged respectively at the abutment (12) and/or heating device (16).

15. Device according to any one of claims 5 to 14, **characterised in that** the abutment (12) and/or the heating device (16) is or are of at least two-part construction and adjustable relative to one another, wherein displacing elements (14, 24, 34) are respectively arranged at the mutually adjustable parts of the abutment (12) and/or the heating device (16).

## Revendications

1. Procédé de soudage de barres profilées en plastique (4, 6), en particulier pour la fabrication de cadres de fenêtres ou de portes, dans lequel deux barres profilées en plastique (4, 6), dont au moins une présente au moins un joint d'étanchéité, sont chauffées au moyen d'un dispositif de chauffage (16) au niveau d'au moins une surface à souder (4.1, 6.1) puis les barres profilées (4, 6) sont pressées l'une contre l'autre pour créer une connexion, **caractérisé en ce que**, avant ou pendant le chauffage ou avant le pressage l'une contre l'autre des surfaces à souder (4.1, 6.1), du matériau de la ou des barres profilées (4, 6) est déplacé dans la région de l'au moins un joint d'étanchéité.

2. Procédé selon la revendication 1, **caractérisé en ce que** le matériau à déplacer de la ou des barres profilées (4, 6) est mis en fusion avant le déplacement.

3. Procédé selon l'une quelconque des revendications précédentes, **caractérisé en ce que** l'on déplace le matériau à raison de 1 mm à 25 mm, de préférence de 1 mm à 6 mm en hauteur et en profondeur, et de 8 mm à 15 mm en longueur.

4. Procédé selon l'une quelconque des revendications précédentes, **caractérisé en ce que** le matériau est déplacé suivant un profil prédéfini, qui est de préférence en forme de parallélépipède, de came, de clavette ou de double clavette, ou en forme de peigne.

5. Dispositif de soudage de barres profilées en plastique (4, 6), dont au moins une présente un joint d'étanchéité, en particulier pour la fabrication de cadres de fenêtres ou de portes, comprenant au moins un dispositif de serrage (8, 10) pour le serrage des barres profilées (4, 6) et comprenant au moins une butée (12) pour l'orientation des barres profilées (4, 6) dans le dispositif (2, 22, 32), ainsi qu'au moins un dispositif de chauffage (16) pour chauffer au moins une des surfaces à souder (4.1, 6.1) des barres profilées (4, 6), **caractérisé en ce qu'**au moins un élément de déplacement (14, 24, 34) disposé sur la butée (12) et/ou disposé sur le dispositif de chauffage (16) et/ou pouvant être introduit dans un espace intermédiaire formé par les barres profilées à souder (4, 6) est prévu pour déplacer le matériau de la ou des barres profilées (4, 6) dans la région de l'au moins un joint d'étanchéité.

6. Dispositif selon la revendication 5, **caractérisé en ce que** le ou les éléments de déplacement sont réalisés sous forme de pièce de pression (14, 24, 34) sur la butée (12) et/ou sur le dispositif de chauffage (16) et/ou sur un dispositif de positionnement (36).

7. Dispositif selon l'une quelconque des revendications 5 ou 6, **caractérisé en ce que** le ou les éléments de déplacement (14, 24, 34) sont réglables, remplaçables rapidement et/ou enfichables, et/ou **en ce que** plusieurs positions d'enfichage sont prévues, et/ou **en ce que** la butée (12) et/ou le dispositif de chauffage (16) et/ou le dispositif de positionnement (36) peuvent être interchangés manuellement et/ou automatiquement et/ou peuvent être remplacés rapidement.

8. Dispositif selon l'une quelconque des revendications 5 à 7, **caractérisé en ce que** le ou les éléments de déplacement (14, 24, 34) sont réalisés en forme de parallélépipède, de came, de clavette ou de double clavette, ou en forme de peigne.

9. Dispositif selon l'une quelconque des revendications 5 à 8, **caractérisé en ce que** l'élément de déplacement (34) est réalisé sous forme d'élément séparé, qui peut de préférence être réglé au moyen d'un dispositif d'avance (36), qui peut être déplacé parallèlement à un plan formé par un plan de connexion respectif des surfaces profilées (4.1, 6.1).

10. Dispositif selon l'une quelconque des revendications 5 à 9, **caractérisé en ce que** l'élément de déplacement (14, 24, 34) peut être chauffé.

11. Dispositif selon l'une quelconque des revendications 5 à 10, **caractérisé en ce qu'**une butée de positionnement (38) est associée à l'élément de déplacement (14, 24, 34).

12. Dispositif selon l'une quelconque des revendications 5 à 11, **caractérisé en ce qu'**à chaque fois au moins un élément de déplacement (14, 24, 34) est prévu sur un miroir chauffant (16) et/ou sur une butée (12) et/ou sur une butée de positionnement (38).

13. Dispositif selon l'une quelconque des revendications 5 à 12, **caractérisé en ce que** l'élément de déplacement (14, 24, 34) et/ou le dispositif de chauffage (16) sont revêtus d'un revêtement antiadhésif.

14. Dispositif selon l'une quelconque des revendications 5 à 13, **caractérisé en ce que** la butée (12) et/ou le dispositif de chauffage (16) sont réglables, de préférence parallèlement à un plan formé par un plan de connexion respectif des surfaces profilées (4.1, 6.1), l'élément de déplacement (14, 24) étant de préférence disposé à chaque fois fixement sur la butée (12) et/ou le dispositif de chauffage (16).

15. Dispositif selon l'une quelconque des revendications 5 à 14, **caractérisé en ce que** la butée (12) et/ou le dispositif de chauffage (16) sont réalisés au moins en deux parties et sont réglables l'un par rapport à l'autre, des éléments de déplacement (14, 24, 34) étant disposés à chaque fois sur les parties de la butée (12) et/ou du dispositif de chauffage (16) réglables les unes par rapport aux autres.
